# EUROPEAN PATENT SPECIFICATION

(11) **EP 1 418 557 B1**
(45) Date of publication and mention of the grant of the patent: **26.04.2006**
(21) Application number: 03025490.8
(22) Date of filing: 06.11.2003
(51) Int. Cl.: G08G 1/123, G07B 13/00

(54) **System, device and method for hiring taxi**
System, Gerät und Verfahren für Taxirufdienst
Système, appareil et méthode de location de taxi

(30) Priority: 06.11.2002 JP 2002321935
(43) Date of publication of application: 12.05.2004
(73) Proprietor: NEC CORPORATION, Tokyo (JP)
(72) Inventor: Yamaguchi, Yuichi, Minato-ku Tokyo (JP)
(74) Representative: Glawe, Delfs, Moll

(56) References cited:
- WO-A-02/06994
- WO-A-99/44186
- WO-A-02/091330
- PATENT ABSTRACTS OF JAPAN vol. 2002, no. 09, 4 September 2002 (2002-09-04) & JP 2002 149527 A (TOSHIBA CORP), 24 May 2002 (2002-05-24)

## Description

### BACKGROUND OF THE INVENTION

### FIELD OF THE INVENTION

The invention relates to system for hiring a taxi, a handy terminal used in such a system, a method of hiring a taxi, and a program for causing a computer to carry out a method of hiring a taxi.

### DESCRIPTION OF THE RELATED ART

For instance, Japanese Patent Application Publication No. 2002-157689 has suggested a method of calculating an arrival time at which a taxi arrives at a place a user indicated. In the method, an arrival time at which a taxi arrives at a place a user indicated is calculated by a data processor equipped in a taxi company, based on data indicative of a current position of a user, input by a user himself/herself to the data processor through his/her handy terminal, and data indicative of a location of a taxi including a radio-transceiver by which a current position of the taxi can be detected through GPS (Global Positioning System).

However, the method is accompanied with a problem that an arrival time at which a taxi arrives at a place a user indicated cannot be calculated at real-time unless a user inputs data indicative of a his/her current position into the data processor through his/her terminal.

The method is accompanied further with a problem that the method cannot provide a taxi user with various taxi information a taxi user would like to know.

WO 0206994 describes a system and a method for determining an efficient transportation route. In particular a computer implemented method is described for providing transportation services comprising steps of receiving a transportation request from a passenger, tracking the passenger's position, following the request using positional detection logic and transmitting positional data identifying the passenger's position to a pick up vehicle.

JP 2002149527 discloses the selection of a type of taxi which is desired based on an information transmitted via the internet to a mobile phone.

### SUMMARY OF THE INVENTION

In view of the above-mentioned problems in the conventional systems and methods, it is an object of the present invention to provide a system for hiring a taxi, a handy terminal used in the system, a method of hiring a taxi, and a program for causing a computer to carry out a method of hiring a taxi, all of which are capable of enabling a taxi user to know an arrival time at which a taxi is expected to arrive at a place a taxi user indicated or a current position of a taxi user, without necessity of a taxi user to input his/her current position into his/her handy terminal.

It is also an object of the present invention to provide a system for hiring a taxi, a handy terminal used in the system, a method of hiring a taxi, and a program for causing a computer to carry out a method of hiring a taxi, all of which are capable of readily providing a taxi user with various taxi information which a taxi user would like to know.

These objects are achieved by a system according to claim 1, a handy terminal according to claim 14, a method according to claim 24 and a program according to claim 33, respectively; the dependent claims are related to further developments of the invention.

The advantages obtained by the aforementioned present invention will be described hereinbelow.

In accordance with the present invention, when a user having a handy terminal which is capable of detecting its current position through GPS (Global Positioning System) would like to take a taxi, the calculator, which is equipped in the handy terminal, calculates an arrival time at which taxis running in the vicinity of the user's current position arrive at the user. The calculated time is displayed in the handy terminal. Hence, the user can select a taxi which can arrive at the user at the earliest time.

In accordance with the present invention, a user can know various taxi information as well as an arrival time at which a taxi arrives at the user. Specifically, a user can receive data indicative of fare information including initial fare, taxi driver data such as an age of a taxi driver, years in which a taxi driver continues service, and comments of a taxi driver, and a name of taxi company.

In accordance with the present invention, data indicative of a current position of a user is obtained by his/her handy terminal having GPS function, data indicative of taxis running in the vicinity of the user is obtained from the taxi-data server, and data of a map around the user is obtained from a map-data server, for instance. Based on these data, a distance between a user and a taxi and an arrival time at which the taxi arrives at the user are calculated by the calculator. In addition, a fare, gender of a taxi driver, an age of a taxi driver, years in which a taxi driver continues service, and comments of a taxi driver are displayed in a display screen of the user's handy terminal. Thus, a user can know an arrival time at which a taxi arrives at and various information of a plurality of taxis without transmitting his/her current position into a taxi company unlike the conventional method. Hence, a user can select a most desirable taxi among taxis running around the user.

### BRIEF DESCRIPTION OF THE DRAWINGS

FIG. 1 is a block diagram of a system in accordance with the first embodiment of the present invention.
FIG. 2 is a block diagram of a handy terminal used in the system in accordance with the first embodiment of the present invention.
FIG. 3 illustrates a relation between the handy terminal illustrated in FIG. 2 and a network in the first embodiment.
FIG. 4 illustrates an example of database of a taxi-data server constituting the system in accordance with the first embodiment.
FIG. 5 illustrates an example of what is displayed in the handy terminal illustrated in FIG. 2.
FIG. 6 is a flow-chart of an operation of the system in accordance with the first embodiment of the present invention.
FIG. 7 illustrates a relation between a handy terminal and a network in the second embodiment.
FIG. 8 a block diagram of a handy terminal used in the system in accordance with the third embodiment of the present invention.
FIG. 9 is a flow-chart of an operation of the system in accordance with the fourth embodiment of the present invention.
FIG. 10 is a flow-chart of an operation of the system in accordance with the fifth embodiment of the present invention.
FIG. 11 illustrates an example of database of a taxi-data server constituting the system in accordance with the sixth embodiment.
FIG. 12 is a block diagram of a handy terminal used in the system in accordance with the seventh embodiment of the present invention.
FIG. 13 is a flow-chart of an operation of the system in accordance with the seventh embodiment of the present invention.
FIG. 14 is a block diagram of a handy terminal used in the system in accordance with the eighth embodiment of the present invention.

### DESCRIPTION OF THE PREFERRED EMBODIMENTS

### [First Embodiment]

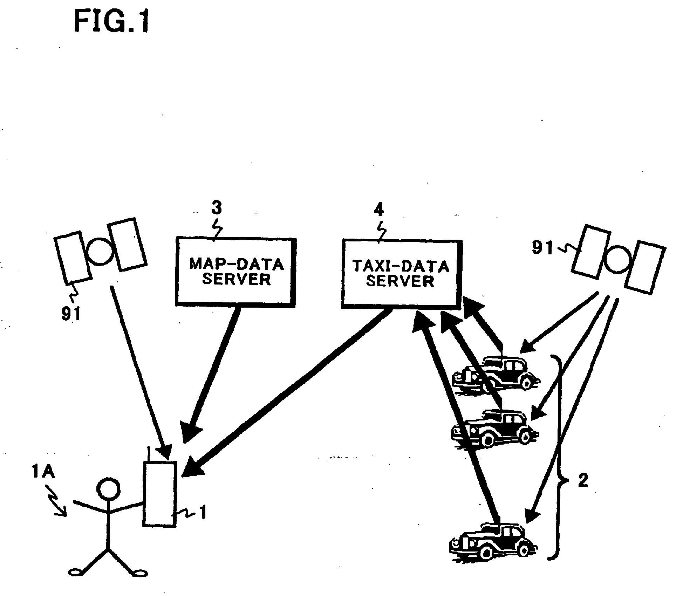

FIG. 1 is a block diagram of a system for hiring a taxi, in accordance with the first embodiment of the present invention.

As illustrated in FIG. 1, the system in accordance with the first embodiment is comprised of a handy terminal 1 of a user 1A, a map-data server 3, and a taxi-data server 4.

The handy terminal 1 is designed to have a function of detecting a current position of the user 1A through GPS (Global Positioning System). Specifically, the handy terminal 1 receives a signal transmitted from a GPS satellite 91 to identify a current position of the user 1A. The handy terminal 1 is comprised of a cellular phone or a personal digital assistant (PDA), for instance.

A plurality of taxis 2 runs in the vicinity of the user 1A. Each of the taxis 2 has a GPS terminal and a radio-signal transceiver. Each of the taxis 2 receives a signal from the GPS satellite 91 through the GPS terminal to identify a current position thereof, and, on receipt of a request from the user 1A to catch the user 1A, transmits a message to the user 1A through the radio-signal transceiver.

The map-data server 3 stores therein data about a map of an area covering from a current position of each of the taxis 2 to a current position of the user 1A, and data about speed restriction of roads in the area.

The taxi-data server 4 stores therein a current position of each of the taxis 2, fare information such as initial fare, driver information such as an age of a taxi driver, years in which a taxi driver continues service, and comments of a taxi driver, and names of taxi companies.

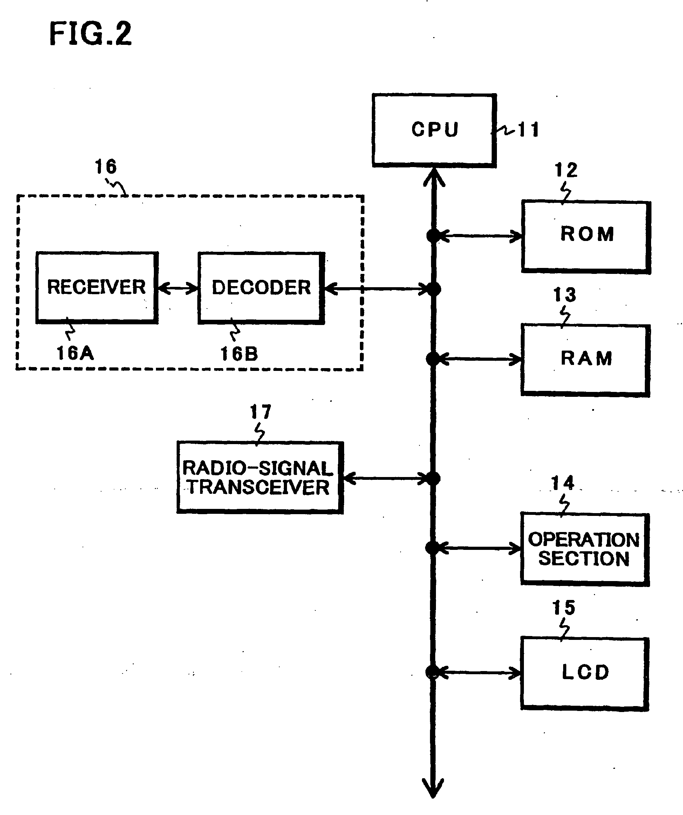

FIG. 2 is a block diagram of the handy terminal 1.

As illustrated in FIG. 2, the handy terminal 1 is comprised of a central processing unit (CPU) 11, a read only memory (ROM) 12, a random access memory (RAM) 13, an operation section 14 including a plurality of keys, a liquid crystal display (LCD) 15, a data processor 16, and a radio-signal transceiver 17.

The central processing unit 11 carries out various calculations and calculates an arrival time at which a taxi is expected to arrive at the user 1A.

The read only memory 12 stores therein a program for controlling an operation of the central processing unit 11. The random access memory 13 provides a working area for the central processing unit 11.

The user 1A can input data into the handy terminal 1 through the operation section 14. For instance, the user 1A can select a taxi among a plurality of taxis by actuating a predetermined key among a plurality of keys arranged in the operation section 14.

The liquid crystal display 15 displays an arrival time at which each of the taxis 2 arrives at the user 1A, a fare, information of taxi drivers of the taxis 2, and names of taxi companies to which the taxi drivers belong.

The data processor 16 is comprised of a radio-signal receiver 16A including an antenna (not illustrated) through which signals transmitted from the GPS satellite 91 are received, and a decoder 16B which converts the signals received through the radio-signal receiver 16A, into data indicative of a current position of the handy terminal 1. That is, the data processor 16 receives signals from the GPS satellite 91, and identifies a current position of the hand terminal 1, based on the received signals.

The handy terminal 1 makes access to the map-data server 3 and the taxi-data server 4 through the radio-signal transceiver 17, and downloads data from the servers 3 and 4 through the radio-signal transceiver 17. In addition, the handy terminal 1 transmits messages to and receives messages from the servers 3 and 4 through the radio-signal transceiver 17.

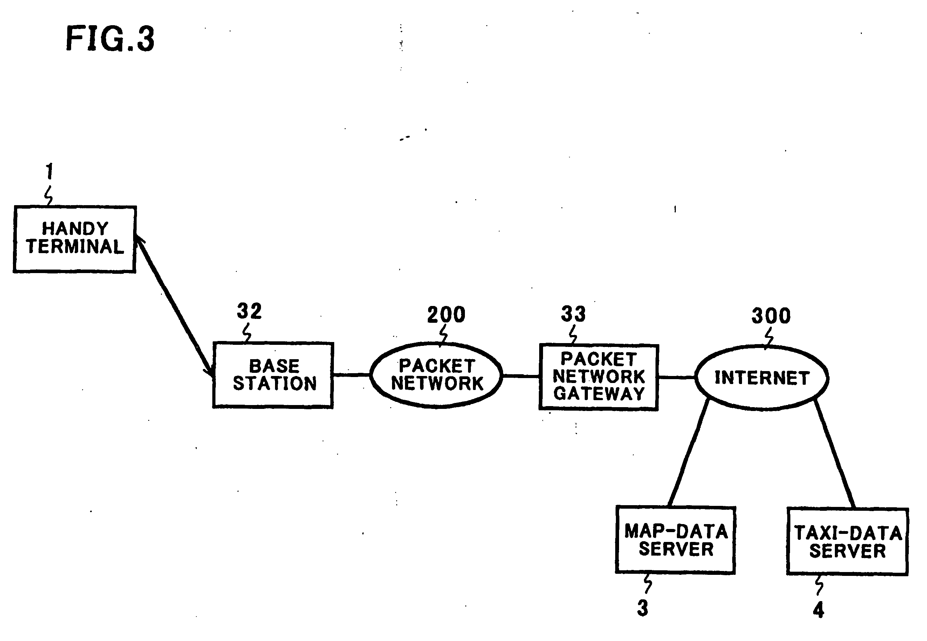

FIG. 3 shows a network between the handy terminal 1 and the servers 3 and 4.

As illustrated in FIG. 3, the handy terminal 1 receives data stored in the servers 3 and 4, through a base station 32, a packet network 200, a packet network gateway 33 and Internet 300.

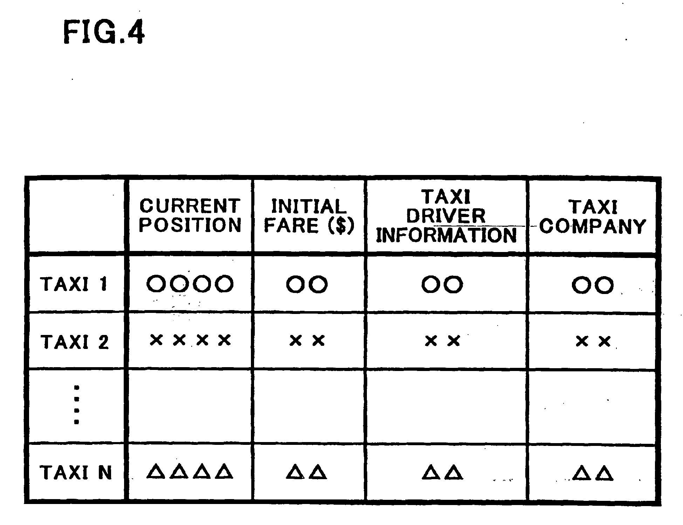

FIG. 4 illustrates an example of database of the taxi-data server 4.

As illustrated in FIG. 4, the taxi-data server 4 has a database storing therein a current position of each of the taxis 2, fare information including an initial fare, taxi driver information including an age of a taxi driver, years in which a taxi driver continues service, and comments of a taxi driver, and names of taxi companies. The taxi-data server 4 always receives information from the taxis 2, and updates the database at real-time.

The map-data server 3 stores map data about an area including both a current position of each of the taxis 2 and a current position of the user 1A, and information about speed restriction of roads in the area.

First, the handy terminal 1 obtains data indicative of a current position thereof by receiving GPS signals from the satellite 91 through the data processor 16. Then, the handy terminal 1 makes access to the taxi-data server 4 and the map-data server 3 through the base station 32, the packet gateway 200, the packet network gateway 33 and the Internet 300 to receive data relating to a current position of each of the taxis 2, a map around a current position of the user 1A and a current position of each of the taxis 2, and speed restriction, through the radio-signal transceiver 17.

Then, the central processing unit 11 executes a control program stored in the read only memory 12 to calculate a distance between a current position of the user 1A and a current position of each of the taxis 2 and an arrival time at which each of the taxis 2 is expected to arrive at the user 1A, based on the received data, and then, display the thus calculated distance and time and the received taxi information in the liquid crystal display 15.

An example of information to be displayed in the liquid crystal display 15 is illustrated in FIG. 15. For instance, an arrival time at which each of the taxis 2 is expected to arrive at the user 1A, an initial fare, taxi driver information, and a taxi company name are displayed in the liquid crystal display 15.

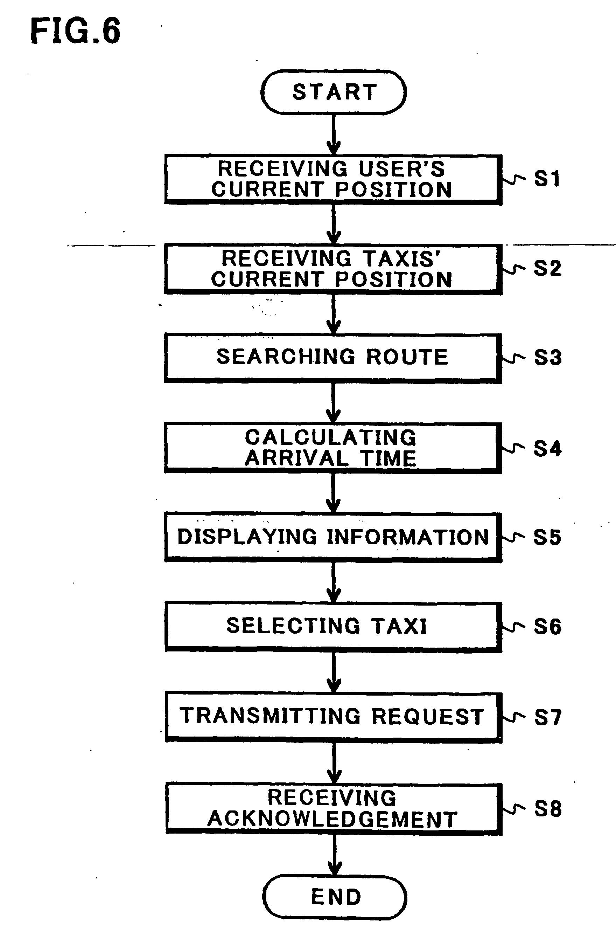

FIG. 6 is a flow-chart of an operation of the system in accordance with the first embodiment.

Hereinbelow is explained an operation of the system with reference to FIG. 6. The central processing unit 11 executes a control-program stored in the read only memory 12, to thereby carry out steps shown in FIG. 6.

The central processing unit 11 in the handy terminal 1 receives GPS signals from the satellite 91 through the radio-signal receiver 16A, and decodes the received GPS signals in the decoder 16B to have data indicative of a current position of the user 1A, in step S1.

Then, the central processing unit 11 makes access to the taxi-data server 4 through the radio-signal transceiver 17, and receives taxi-driver information and names of taxi companies as illustrated in FIG. 4, from the taxi-data server 4 through the base station 32, the packet gateway 200; the packet network gateway 33 and the Internet 300, in step S2.

Then, the central processing unit 11 makes access to the map-data server 3 to receive data of a map covering an area between a current position of the user 1A and a current position of each of the taxis 2 and data about speed restriction in the area from the map-data server 3, based on the data received in the above-mentioned steps S1 and S2. Based on the data received from the map-data server 3, the central processing unit 11 searches a route and calculates a distance between a current position of the user 1A and a current position of each of the taxis 2, in step S3.

Then, the central processing unit 11 calculates an arrival time at which each of the taxis 2 is expected to arrive at the user 1A in step S4, based on the distance and the speed restriction both obtained in step S3.

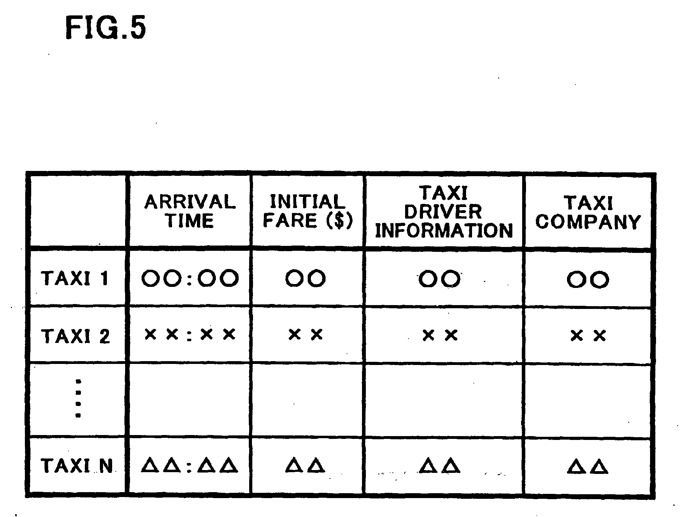

Then, the central processing unit 11 displays the taxi driver information and names of taxi companies both obtained in step S2 and the arrival time calculated in step S4, in the liquid crystal display 15, in step S5. An example of displayed information is illustrated in FIG. 5.

Then, the user 1A selects one of the taxis 2 displayed in the liquid crystal display 15, by actuating a predetermined key, in step S6.

Then, the central processing unit 11 transmits a request to arrive at the user 1A together with data indicating a current position of the user 1A to the selected taxi 2 through the Internet 300, in step S7.

On receipt of the request from the central processing unit 11 of the handy terminal 1, the selected taxi 2 transmits acknowledgement to the handy terminal 1 of the user 1A through the Internet 300. The central processing unit 11 receives the acknowledgement from the selected taxi 2 through the radio-signal transceiver 17, in step S8.

If the user 1A would like to know an arrival time at which a taxi is expected to arrive at the user 1A, the user 1A has to know his/her current position, because a distance between a current position of the user 1A and a current position of a taxi has to be calculated. As explained above, in accordance with the first embodiment, the user 1A can know his /her current position by receiving GPS signals from the GPS satellite 91 without any operation such as actuation of a predetermined key, unlike the conventional system. Based on the thus obtained current position of the user 1A and a current position of a taxi, the central processing unit 11 of the handy terminal 1 calculates an arrival time at which the selected taxi 2 is expected to arrive at the user 1A. Thus, the user 1A can know arrival time of the selected taxi 2 without any specific operation.

In addition, the user 1A can get taxi driver information and a name of a taxi company as well as the arrival time of a taxi.

In accordance with the first embodiment, the user 1A receives taxi driver information of a plurality of taxi drivers. Hence, based on received taxi driver information, the user 1A can select his/her desired taxi among a plurality of taxis.

In the first embodiment, the handy terminal 1 may be designed to store data stored in the map-data server 3.

### [Second Embodiment]

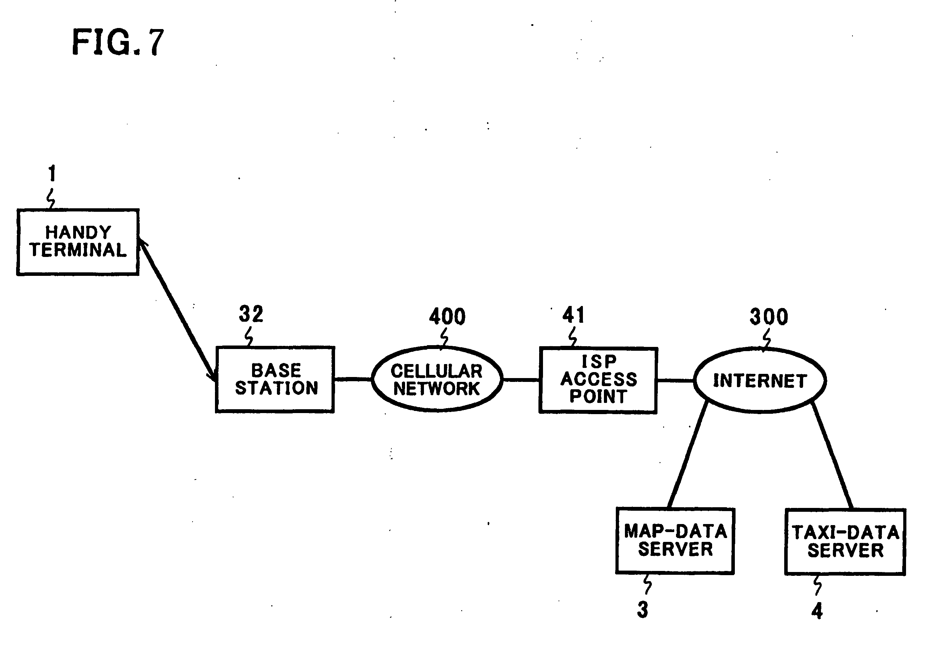

FIG. 7 illustrates a relation between the handy terminal 1 and a network in the second embodiment.

As illustrated in FIG. 7, the handy terminal 1 is designed to make access to the map-data server 3 and the taxi-data server 4 through the base station 32, a cellular network 400, an internet service provider (IPS) access point 41, and Internet 300.

An operation of the system in accordance with the third embodiment is identical with the operation of the system in accordance with the first embodiment.

In accordance with the second embodiment, the handy terminal 1 can obtain map data and taxi driver information at real-time.

### [Third Embodiment]

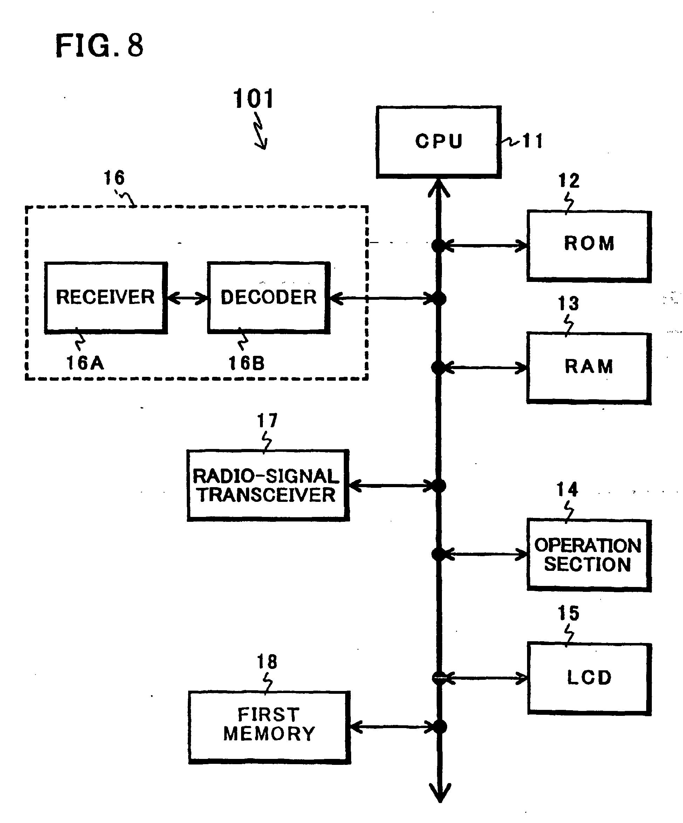

FIG. 8 is a block diagram of a handy terminal used in a system for hiring a taxi, in accordance with the third embodiment of the present invention.

The handy terminal 101 in the third embodiment is designed to additionally include a first memory 18 in comparison with the handy terminal 1 used in the first embodiment. Parts or elements that correspond to those of the handy terminal 1 in the first embodiment have been provided with the same reference numeral, and operate in the same manner as corresponding parts or elements in the handy terminal 1, unless explicitly explained hereinbelow.

The first memory 18 stores data relating to taxis which the user 1A used to hire. Based on data stored in the first memory 18, the central processing unit 11 receives data indicative of a current position of a taxi which the user 1A used to hire, from the taxi-data server 4 through the radio-signal transceiver 17.

Then, the central processing unit 11 makes access to the map-data server 3 to receive data of a map covering an area between a current position of the user 1A and a current position of the taxi 2 and data about speed restriction in the area from the map-data server 3. Based on the data received from the map·data server 3, the central processing unit 11 searches a route and calculates a distance between a current position of the user 1A and a current position of the taxi 2.

Then, the central processing unit 11 calculates an arrival time at which the taxi 2 is expected to arrive at the user 1A, based on the distance and the speed restriction, and displays the thus calculated arrival time in the liquid crystal display 15.

An operation of the system in accordance with the third embodiment is identical with the operation of the system in accordance with the first embodiment.

In accordance with the third embodiment, the user 1A can find a taxi which the user 1A used to hire and found it of good service, and hire the taxi again.

### [Fourth Embodiment]

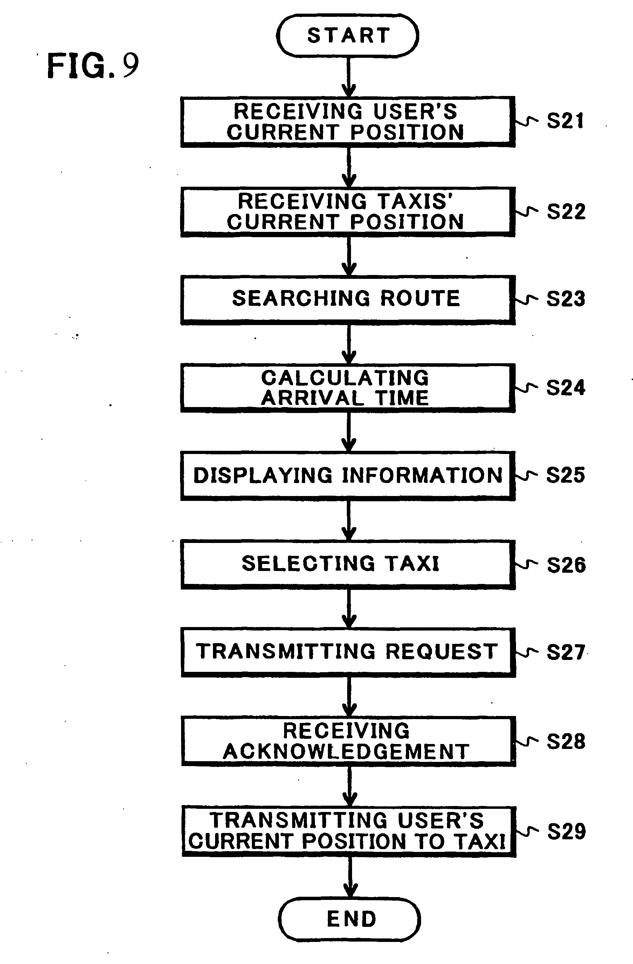

FIG. 9 is a flow-chart of an operation of a system for hiring a taxi, in accordance with the fourth embodiment.

The system in accordance with the fourth embodiment has the same structure as that of the system in accordance with the first embodiment, and a handy terminal used in the fourth embodiment has the same structure as that of the handy terminal 1 used in the first embodiment.

The system in accordance with the fourth embodiment carries out an additional step of transmitting data about a current position of the user 1A to a selected taxi at real-time, in comparison with the first embodiment.

Hereinbelow is explained an operation of the system in accordance with the fifth embodiment with reference to FIGs. 1, 2 and 9. Steps S21 to S28 in FIG. 9 are identical with steps S1 to S8 in FIG. 6, and hence, are not explained.

The central processing unit 11 transmits a request to the taxi 2 selected by the user 1A to come to the user 1A, and receives acceptance of the request from the taxi 2. Then, the central processing unit 11 transmits a current position of the user 1A to the selected taxi 2 through Internet 300 such that the selected taxi 2 can know a current position of the user 1A at real-time, in step S29.

In accordance with the fourth embodiment, it is not necessary for the user 1A to stay there to wait for the taxi 2. The user 1A may move to any place while waiting for the taxi 2.

### [Fifth Embodiment]

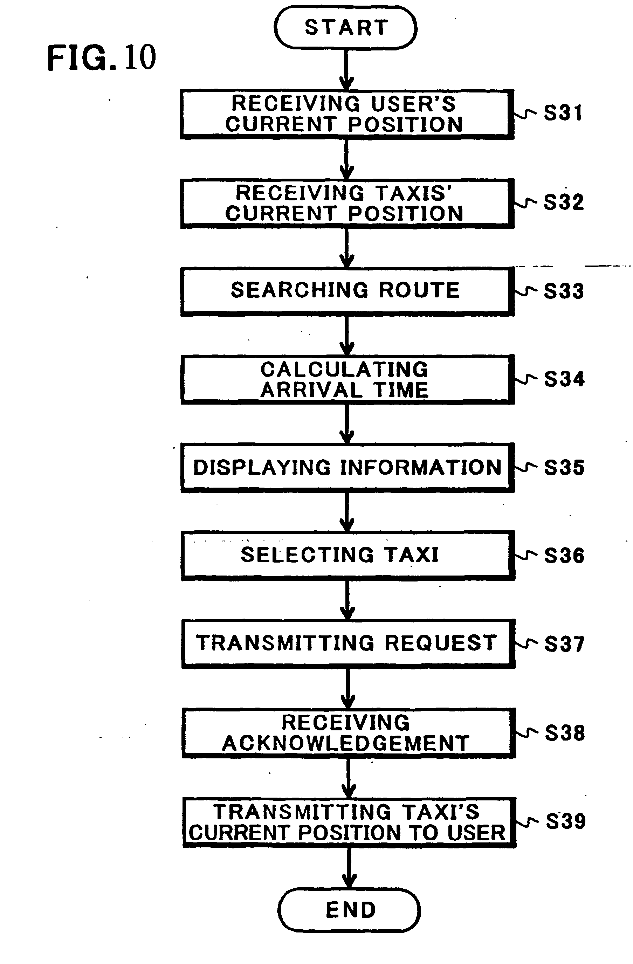

FIG. 10 is a flow chart of an operation of a system for hiring a taxi, in accordance with the fifth embodiment.

The system in accordance with the fifth embodiment has the same structure as that of the system in accordance with the first embodiment, and a handy terminal used in the sixth embodiment has the same structure as that of the handy terminal 1 used in the first embodiment.

The system in accordance with the fifth embodiment carries out an additional step of transmitting data about a current position of a selected taxi 2 to the handy terminal 1 at real-time, in comparison with the first embodiment.

Hereinbelow is explained an operation of the system in accordance with the fifth embodiment with reference to FIGs. 1, 2 and 10. Steps S31 to S38 in FIG. 10 are identical with steps S1 to S8 in FIG. 6, and hence, are not explained.

The central processing unit 11 transmits a request to the taxi 2 selected by the user 1A to come to the user 1A, and receives acceptance of the request from the taxi 2. Then, the central processing unit 11 receives data indicative of a current position of the selected taxi 2, from the taxi-data server 4 through the radio-signal transceiver in step S39.

In accordance with the fifth embodiment, the user 1A is kept informed of a current position of the selected taxi 2 at real-time.

### [Sixth Embodiment]

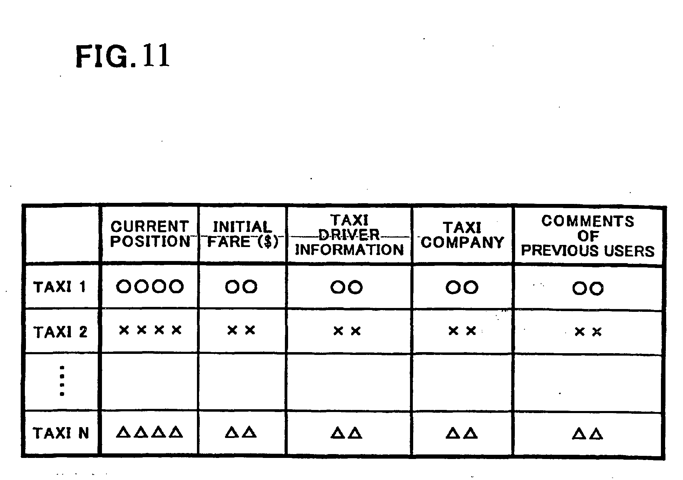

FIG. 11 illustrates a database of a taxi-data server used in a system for hiring a taxi, in accordance with the sixth embodiment.

The system in accordance with the sixth embodiment has the same structure as that of the system in accordance with the first embodiment, and a handy terminal used in the sixth embodiment has the same structure as that of the handy terminal 1 used in the first embodiment.

The taxi-data server 4 in the sixth embodiment is designed to store comments of users who used to hire each of taxis.

As illustrated in FIG. 11, the taxi-data server 4 stores a current position, an initial fare, comment of a taxi driver, a name of a taxi company, and comments of previous users, for each of the taxis 2.

The taxi-data server 4 is designed for a user who used to hire each of the taxis 2 to be able to write comments thereinto through the Internet 300. For instance, a user make comments by actuating keys arranged in the operation section 14 of the handy terminal 1, and transmits the comments to the taxi-data server 4 through the radio-signal transceiver 17, the base station 32, the packet network 200, the packet network gateway 33 and Internet 300. A user can update his/her comments stored in the taxi-data server 4 by overwriting them.

In accordance with the sixth embodiment, the user 1A can get detailed information about taxi drivers, and hence, can select only good drivers.

### [Seventh Embodiment]

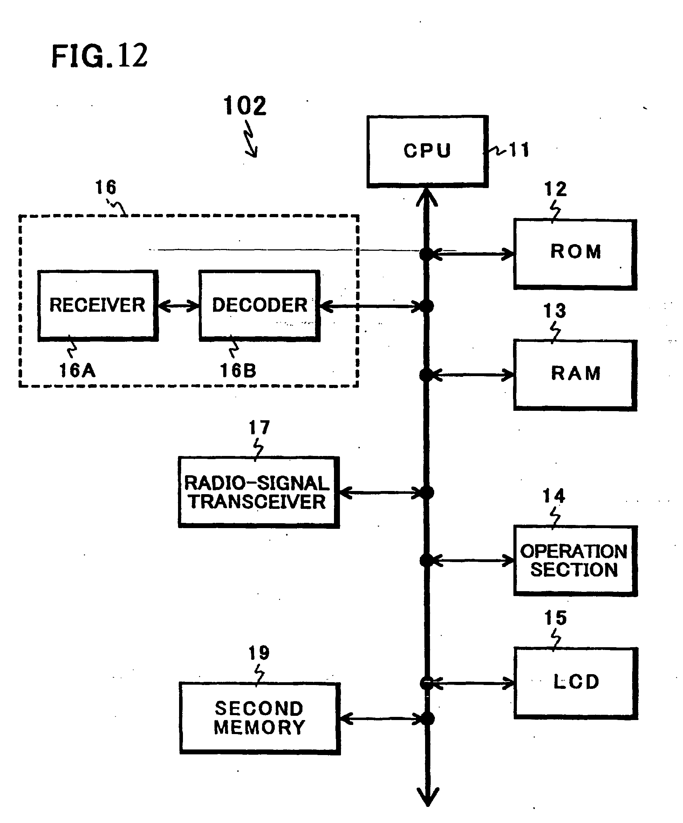

FIG. 12 is a block diagram of a handy terminal used in a system for hiring a taxi, in accordance with the seventh embodiment of the present invention.

The handy terminal 102 in the seventh embodiment is designed to additionally include a second memory 19 in comparison with the handy terminal 1 used in the first embodiment. Parts or elements that correspond to those of the handy terminal 1 in the first embodiment have been provided with the same reference numeral, and operate in the same manner as corresponding parts or elements in the handy terminal 1, unless explicitly explained hereinbelow.

The second memory 19 stores data relating to previous destinations having been input by the user 1A through the operation section 14. The central processing unit 11 transmits destination data stored in the second memory 19, to the selected taxi 2 through the radio-signal transceiver 17.

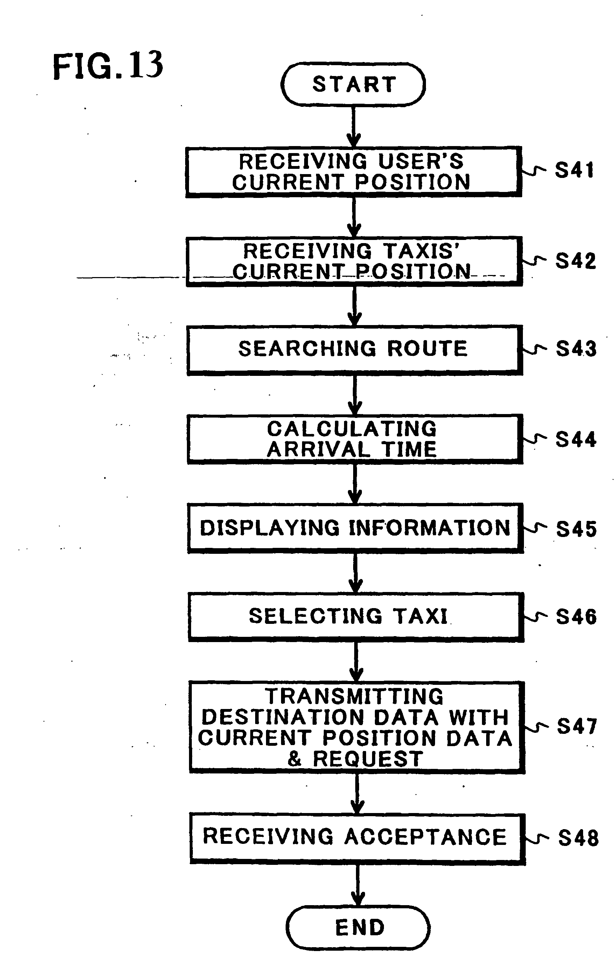

FIG. 13 is a flow-chart of an operation of the system in accordance with the seventh embodiment.

The system in accordance with the seventh embodiment has the same structure as that of the system in accordance with the first embodiment.

The system in accordance with the seventh embodiment carries out an additional step of transmitting data indicative of a destination of the user 1A, to a selected taxi 2, in comparison with the first embodiment.

Hereinbelow is explained an operation of the system in accordance with the eighth embodiment with reference to FIGs. 1, 14 and 13. Steps S41 to S46 in FIG. 13 are identical with steps S1 to S6 in FIG. 6, and hence, are not explained.

After selecting a taxi among a plurality of taxis, the central processing unit 11 transmits data indicative of a destination designated by the user 1A through the operation section 14, and data relating to previous destinations stored in the second memory 19 as well as a request to come to the user 1A and data indicative a current position of the user 1A, to the selected taxi 2 through the radio-signal transceiver 17, the base station 32, the packet network 200, the packet network gateway 33 and the Internet 300, in step S47.

Then, the central processing unit 11 receives acceptance of the request from the selected taxi 2, in step S48.

In accordance with the seventh embodiment, the user 1A can arrive at his/her destination without indicating a destination and/or a route to a taxi driver. Hence, even if the user 1A falls asleep in a taxi, he/she can surely arrive at the destination.

### [Eighth Embodiment]

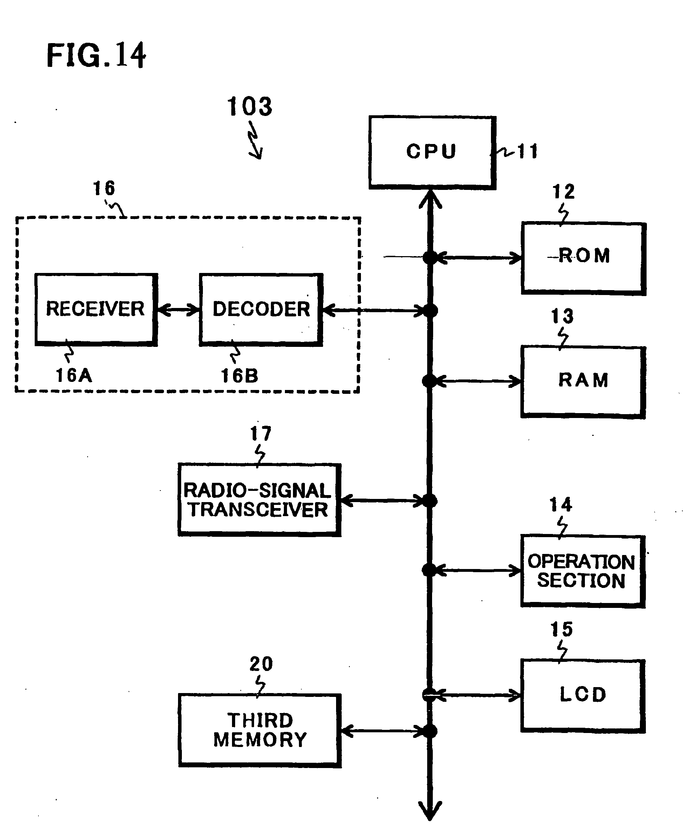

FIG. 14 is a block diagram of a handy terminal used in a system for hiring a taxi, in accordance with the eighth embodiment of the present invention.

The handy terminal 103 used in the eighth embodiment is designed to additionally include a third memory 20 in comparison with the handy terminal 1 used in the first embodiment. Parts or elements that correspond to those of the handy terminal 1 in the first embodiment have been provided with the same reference numeral, and operate in the same manner as corresponding parts or elements in the handy terminal 1, unless explicitly explained hereinbelow.

The third memory 20 stores data relating to routes of taxis which the user 1A used to hire.

The third memory 20 stores therein data relating to a route of a taxi, transmitted from the data processor 16. The central processing unit 11 reads such data out of the third memory 20, and displays the read-out data in the liquid crystal display 15.

The system in accordance with the eighth embodiment operates in the same way as the system in accordance with the first embodiment.

In accordance with the ninth embodiment, the user 1A can check whether a taxi driver selects a shortest route, and if a taxi driver does not select a shortest route, the user 1A can request a taxi driver to pay an additional charge back to the user 1A.

The system in accordance with the present invention has such a structure as mentioned above, and operates in such a manner as mentioned above.

The system may be accomplished by a data processor such as a personal computer or a work station, and a program to carry out steps to be carried out by the system in accordance with the present invention.

Such a program may be presented through a recording medium readable by a computer. The program is read out into a data processor when the data processor starts its operation. By controlling an operation of the data processor, the parts constituting the system, such as the map-data server 3, the taxi-data server 4 and the handy terminal 1, can be accomplished in the data processor. The first to third memories 18 to 20 can be accomplished by a storage device of the data processor, such as a magnetic disc.

An operation of the map-data server 3, the taxi-data server 4 and the handy terminal 1 can be accomplished by a computer program written in a language readable by a computer.

For operating the map-data server 3, the taxi-data server 4 and the handy terminal 1 by means of a computer program, they are designed to include a memory to store a computer program therein, for instance. The computer program is stored in the memory, and is read out into a central processing unit such as the central processing unit 11. Thus, such an operation of the central processing unit 11 as mentioned above is accomplished in accordance with the computer program.

As an alternative, a recording medium storing such a computer program as mentioned above may be set into the central processing unit.

The functions of the central processing unit may be accomplished as a program including various commands, and be presented through a recording medium readable by a computer.

In the specification, the term "recording medium" means any medium which can record data therein. The term "recording medium" includes, for instance, a disk-shaped recorder such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk, a memory chip such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM such as a compact flush card, a hard disk, and any other suitable means for storing a program therein.

A recording medium storing a program for accomplishing the above-mentioned apparatus may be accomplished by programming functions of the above-mentioned apparatuses with a programming language readable by a computer, and recording the program in a recording medium such as mentioned above.

A hard disc equipped in a server may be employed as a recording medium. It is also possible to accomplish the recording medium in accordance with the present invention by storing the above mentioned computer program in such a recording medium as mentioned above, and reading the computer program by other computers through a network.

As a computer, there may be used a personal computer, a desk-top type computer, a note-book type computer, a mobile computer, a lap-top type computer, a pocket computer, a server computer, a client computer, a workstation, a host computer, a commercially available computer, and electronic exchanger, for instance.

## Claims

1. A system for hiring a taxi (2), comprising a handy terminal (1, 101, 102, 103) including a calculator (11), and a receiver equipped in a taxi (2), wherein
the handy terminal (1, 101, 102, 103) has functions of detecting a current position of itself and a taxi located in the vicinity of the handy terminal through GPS, Global Positioning System, and transmitting a request to the receiver of the taxi (2) that the taxi (2) comes to the handy terminal (1, 101, 102, 103), and
the calculator (11) calculates an arrival time at which the taxi (2) is expected to arrive at the handy terminal (1, 101, 102, 103), based on the current position of the handy terminal (1, 101, 102, 103) and a current position of the taxi (2).

2. The system as set forth in claim 1, further comprising a taxi-data server (4) storing therein data relating to the taxi (2),
the handy terminal (1, 101, 102, 103) having a function of displaying the taxi (2) data transmitted from the taxi-data server (4).

3. The system as set forth in claim 2, wherein the taxi (2) data includes at least one of a current position of the taxi (2), a fare of the taxi (2), an age of a driver of the taxi (2), years for which a driver of the taxi (2) continues service, comments of the driver, and comments of a user (1A) who previously took the taxi (2).

4. The system as set forth in claim 2, wherein the handy terminal (1, 101, 102, 103) displays a plurality of the taxi (2) data therein such that a user (1A) of the handy terminal (1, 101, 102, 103) can select a taxi (2) among displayed taxis, based on the plurality of the taxi data.

5. The system as set forth in claim 2, wherein the handy terminal (1, 101, 102, 103) downloads the taxi data from the taxi-data server (4) thereto through a packet network (200), a packet network gateway (33) and Internet (300).

6. The system as set forth in claim 2, wherein the handy terminal (1, 101, 102, 103) downloads the taxi data from the taxi data server (4) thereto through a cellular phone network (400), an access point (41) of an Internet service provider (ISP) and Internet (300).

7. The system as set forth in claim 2, further comprising a memory (18) storing data of taxis which users used to hire, and wherein the calculator (11) receives a current position of a taxi (2) which a user (1A) of the handy terminal (1, 101, 102, 103) selects among the taxis, from the taxi-data server (4), and calculates an arrival time at which the selected taxi (2) is expected to arrive at the handy terminal (1, 101, 102, 103), based on a current position of the handy terminal (1, 101, 102, 103) and the current position of the taxi (2).

8. The system as set forth in any one of claims 1 to 7, wherein the handy terminal (1, 101, 102, 103) receives, after transmission of the request to the receiver, at least one of a current position of the handy terminal (1, 101, 102, 103) and a current position of the taxi (2) at real-time.

9. The system as set forth in claim 3, wherein the taxi-data server (4) receives comments of a user (1A) of the handy terminal (1, 101, 102, 103) about a taxi (2) which the user (1A) hired, through Internet (300).

10. The system as set forth in any one of claims 1 to 7, wherein the handy terminal (1, 101, 102, 103) includes a transmitter (17) transmitting data of a destination to the receiver when the handy terminal (1, 101, 102, 103) transmits the request to the receiver.

11. The system as set forth in any one of claims 1 to 7, wherein the handy terminal (1, 101, 102, 103) includes a memory (20) storing therein data of a route which a taxi (2) a user (1A) of the handy terminal (1, 101, 102, 103) hired ran.

12. The system as set forth in any one of claims 1 to 7, wherein the handy terminal (1, 101, 102, 103) is comprised of a cellular phone.

13. The system as set forth in any one of claims 1 to 7, further comprising a map-data server (3) storing therein data about a map of an area covering from a current position of the taxi (2) to a current position of the handy terminal (1, 101, 102, 103), and data about speed restriction of roads in the area,
the handy terminal (1, 101, 102, 103) receiving the data from the map-data server (3).

14. A handy terminal used in a system for hiring a taxi, the system being comprised of the handy terminal (1, 101, 102, 103) including a calculator, and a receiver equipped in a taxi (2), wherein the handy terminal has functions of detecting a current position of itself and a taxi (2) located in the vicinity of the handy terminal (1, 101, 102, 103) through GPS, Global Positioning System, and transmitting a request to the receiver that the taxi (2) comes to the handy terminal (1, 101, 102, 103), and
the calculator (11) calculating an arrival time at which the taxi (2) is expected to arrive at the handy terminal (1, 101, 102, 103), based on the current position of the handy terminal (1, 101, 102, 103) and the current position of the taxi (2).

15. The handy terminal (1, 101, 102, 103) as set forth in claim 14, wherein the system further includes a taxi-data server (4) storing therein data relating to the taxi (2), and wherein the handy terminal (1, 101, 102, 103) has a function of displaying the taxi (2) data transmitted from the taxi-data server (4).

16. The handy terminal (1, 101, 102, 103) as set forth in claim 15, wherein the handy terminal (1, 101, 102, 103) displays a plurality of the taxi data such that a user (1A) of the handy terminal (1, 101, 102, 103) can select a taxi (2) among displayed taxis, based on the plurality of the taxi data.

17. The handy terminal (1, 101, 102, 103) as set forth in claim 15, wherein the handy terminal (1, 101, 102, 103) downloads the taxi data from the taxi-data server (4) thereto through a packet network (200), a packet network gateway (33) and Internet (300).

18. The handy terminal (1, 101, 102, 103) as set forth in claim 15, wherein the handy terminal (1, 101, 102, 103) downloads the taxi data from the taxi-data server (4) thereto through a cellular phone network (400), an access point (41) of an Internet service provider (ISP) and Internet (300).

19. The handy terminal (1, 101, 102, 103) as set forth in claim 15, further comprising a memory (18) storing data of taxis which other users used to hire, the calculator (11) receiving a current position of a taxi (2) which a user (1A) of the handy terminal (1, 101, 102, 103) selects among the taxis, from the taxi-data server (4), and calculating an arrival time at which the selected taxi (2) is expected to arrive at the handy terminal (1, 101, 102, 103), based on a current position of the handy terminal (1, 101, 102, 103) and the current position of the taxi (2).

20. The handy terminal (1, 101, 102, 103) as set forth in any one of claims 14 to 19 wherein the handy terminal (1, 101, 102, 103) receives, after transmission of the request to the receiver, the current position of the taxi (2) at real-time.

21. The handy terminal (1, 101, 102, 103) as set forth in any one of claims 14 to 19, further including a transmitter (17) transmitting data of a destination to the receiver when the handy terminal (1, 101, 102, 103) transmits the request to the receiver.

22. The handy terminal (1, 101, 102, 103) as set forth in any one of claims 14 to 19, further including a memory storing therein data of a route which a taxi (2) a user (1A) of the handy terminal (1, 101, 102,103) hired ran.

23. The handy terminal (1, 101, 102, 103) as set forth in any one of claims 14 to 19, wherein the handy terminal (1, 101, 102, 103) is comprised of a cellular phone.

24. A method of hiring a taxi by transmitting a request from a user's handy terminal (1, 101, 102, 103) equipped with a calculator to a receiver equipped in a taxi (2) located in the vicinity of the handy terminal (1, 101, 102, 103) that the taxi (2) comes to the handy terminal (1, 101, 102, 103), comprising:
(a) detecting a current position of the handy terminal (1, 101, 102, 103) and the taxi through GPS Global Positioning System; and
(b) calculating an arrival time at which the taxi (2) is expected to arrive at the handy terminal (1, 101, 102, 103), based on the current position of the handy terminal (1, 101, 102, 103) and the current position of the taxi (2).

25. The method as set forth in claim 24, further comprising:
(c) receiving data relating to the taxi (2) from a taxi-data server (4); and
(d) displaying the taxi data in the handy terminal (1, 101, 102, 103).

26. The method as set forth in claim 25, wherein the handy terminal (1, 101, 102, 103) displays a plurality of the taxi data in the (d) such that a user (1A) of the handy terminal (1, 101, 102, 103) can select a taxi (2) among displayed taxis, based on the plurality of the taxi data.

27. The method as set forth in claim 25, further comprising downloading the taxi (2) data from the taxi-data server (4) to the handy terminal (1, 101, 102, 103) through a packet network (200), a packet network gateway (33) and Internet (300).

28. The method as set forth in claim 25, further comprising downloading the taxi (2) data from the taxi (2)-data server to the handy terminal (1, 101, 102, 103) through a cellular phone network (400), an access point (41) of an Internet service provider (ISP) and Internet (300).

29. The method as set forth in claim 25, further comprising:
storing data of taxi (2)s which users used to hire; and
receiving a current position of a taxi (2) which a user (1A) of the handy terminal (1, 101, 102, 103) selects among the taxis, from the taxi data server (4).

30. The method as set forth in claim 25, further comprising transmitting comments of a user (1A) of the handy terminal (1, 101, 102, 103) about a taxi (2) which the user (1A) hired, to the taxi-data server (4) through Internet (300).

31. The method as set forth in any one of claims 24 to 30, further comprising transmitting data of a destination to the receiver when the handy terminal (1, 101, 102, 103) transmits the request to the receiver.

32. The method as set forth in any one of claims 24 to 30, further comprising storing therein data of a route which a taxi (2) a user (1A) of the handy terminal (1, 101, 102, 103) hired ran.

33. A program for causing a computer to carry out a method of hiring a taxi (2) by transmitting a request from a user's handy terminal (1, 101, 102, 103) equipped with a calculator to a receiver equipped in a taxi (2) located in the vicinity of the handy terminal (1, 101, 102, 103) that the taxi (2) comes to the handy terminal (1, 101, 102, 103), and wherein steps executed by the computer in accordance with the program include:
a) detecting a current position of the handy terminal (1, 101, 102, 103) and the taxi through GPS, Global Positioning System; and
b) calculating an arrival time at which the taxi (2) is expected to arrive at the handy terminal (1, 101, 102, 103), based on the current position of the handy terminal (1, 101, 102, 103) and the current position of the taxi (2).

34. The program as set forth in claim 33, wherein the steps further include:
c) receiving data relating to the taxi (2) from a taxi-data server (4); and
d) displaying the taxi data in the handy terminal (1, 101, 102, 103).

35. The program as set forth in claim 34, wherein a plurality of the taxi data is displayed in the step d) such that a user (1A) of the handy terminal (1, 101, 102, 103) can select a taxi (2) among displayed taxis, based on the plurality of the taxi data.

36. The program as set forth in claim 33, 34 or 35, wherein the steps further include downloading the taxi data from the taxi-data server (4) to the handy terminal (1, 101, 102, 103) through a packet network (200), a packet network gateway (32) and Internet (300).

37. The program as set forth in claim 33, 34 or 35, wherein the steps further include downloading the taxi data from the taxi-data server (4) to the handy terminal (1, 101, 102, 103) through a cellular phone network (400), an access point (41) of an Internet service provider (ISP) and Internet (300).

38. The program as set forth in claim 33, 34 or 35, wherein the steps further include:
storing data of taxis which users used to hire; and
receiving a current position of a taxi (2) which a user (1A) of the handy terminal (1, 101, 102, 103) selects among the taxis, from the taxi-data server (4).

39. The program as set forth in claim 33, 34 or 35, wherein the steps further include transmitting comments of a user (1A) of the handy terminal (1, 101, 102, 103) about a taxi (2) which the user (1A) hired, to the taxi-data server (4) through Internet (300).

40. The program as set forth in claim 33, 34 or 35, wherein the steps further include transmitting data of a destination to the receiver when the handy terminal (1, 101, 102, 103) transmits the request to the receiver.

41. The program as set forth in claim 33, 34 or 35, wherein the steps further include storing therein data of a route which a taxi (2) a user (1A) of the handy terminal (1, 101, 102, 103) hired ran.

## Patentansprüche

1. System zum Bestellen eines Taxis (2) mit einem Handy-Anschluss (1, 101, 102, 103) mit einem Rechner (11) und einem Empfänger, mit dem ein Taxi (2) ausgestattet ist,
wobei der Handy-Anschluss (1, 101, 102, 103) eine Funktion zum Erfassen seiner gegenwärtigen Position aufweist und eines Taxis, das in der Umgebung des Handy-Anschlusses angeordnet ist, über GPS Globales Positionierungssystem, und Übermitteln einer Anfrage an den Empfänger des Taxis (2), dass das Taxi (2) zu dem Handy-Anschluss (1, 101, 102, 103) kommen soll,
wobei der Rechner (11) eine Ankunftszeit, zu der erwartet wird, dass das Taxi (2) am Handy-Anschluss (1, 101, 102, 103) ankommt, aufgrund der gegenwärtigen Position des Handy-Anschlusses (1, 101, 102, 103) und einer gegenwärtigen Position des Taxis (2), berechnet.

2. System nach Anspruch 1, mit ferner einem Taxidatenserver (4), der Daten bezüglich des Taxis (2) speichert,
wobei der Handy-Anschluss (1, 101, 102, 103) eine Funktion zum Anzeigen von Daten des Taxis (2) aufweist, die von dem Taxisdatenserver (4) übertragen werden.

3. System nach Anspruch 2, wobei die Daten des Taxis (2) zumindest die gegenwärtige Position des Taxis (2), einen Tarif des Taxis (2), das Alter des Taxifahrers, die Jahre, seit denen der Fahrer des Taxis (2) fortgesetzt tätig ist, Kommentare des Fahrers oder Kommentare eines Fahrgastes (1A) der vorher dieses Taxis (2) genommen hat, umfasst.

4. System nach Anspruch, wobei des Handy-Anschluss (1, 101, 102, 103) eine Anzahl von Daten über das Taxis (2) anzeigt, derart, dass ein Benutzer (1A) des Handy-Anschlusses (1, 101, 102, 103) ein Taxi (2) unter angezeigten Taxis basierend auf der Anzahl von Taxidaten auswählen kann.

5. System nach Anspruch 2, wobei der Handy-Anschluss (1, 101, 102, 103) die Taxidaten von dem Taxidatenserver (4) über ein Paketnetzwerk (200), ein Paketnetzwerkgateway (33) und das Internet (300) herunterlädt.

6. System nach Anspruch 2, wobei der Handy-Anschluss (1, 101, 102, 103) die Taxidaten von dem Taxidatenserver (4) über ein Mobiltelefonnetwerk (400), einen Zugriffspunkt (41) eines Internetserviceproviders (ISP) und das Internet (300) herunterlädt.

7. System nach Anspruch 2, mit ferner einem Speicher (18) zum Speichern von Daten von Taxis, die ein Benutzer normalerweise anmietet, wobei der Rechner (11) eine gegenwärtige Position eines Taxis (2) empfängt, das ein Benutzer (1A) des Handy-Anschlusses (1, 101, 102, 103) unter den Taxis von dem Taxidatenserver (4) auswählt, und eine Ankunftszeit berechnet, bei der die Ankunft des ausgewählten Taxis (2) an dem Handy-Anschluss (1, 101, 102, 103) ankommt, basierend auf der gegenwärtigen Position des Handy-Anschlusses (1, 101, 102, 103) und der gegenwärtigen Position des Taxis (2).

8. System nach einem der Anprüche 1 bis 7, wobei der Handy-Anschluss (1, 101, 102, 103) nach der Übermittlung der Anforderung an den Empfänger zumindest die gegenwärtige Position des Handy-Anschlusses (1, 101, 102, 103) oder eine gegenwärtige Position des Taxis (2) in Echtzeit empfängt.

9. System nach Anspruch 3, wobei der Taxidatenserver (4) Kommentare eines Benutzers (1A) des Handy-Anschlusses (1, 101, 102, 103) über ein Taxi (2), das ein Benutzer (1A) germietet hat, über Internet (300) empfängt.

10. System nach einem der Ansprüche 1 bis 7, wobei der Handy-Anschluss (1, 101, 102, 103) einen Sender (17) aufweist, der Daten eines Ziels an den Empfänger übermittelt, wenn der Handy-Anschluss (1, 101, 102, 103) die Anforderung an den Empfänger übermittelt.

11. System nach einem der Ansprüche 1 bis 7, wobei der Handy-Anschluss (1, 101, 102, 103) einen Speicher (20) aufweist, der Daten über eine Route speichert, die ein Taxi (2), das ein Benutzer (1A) des Handy-Anschlusses (1, 101, 102, 103) gemietet hat, gefahren ist.

12. System nach einem der Anschlüsse 1 bis 7, wobei der Handy-Anschluss (1, 101, 102, 103) ein Mobiltelefon aufweist.

13. System nach einem der Ansprüche 1 bis 7, mit ferner einem Kartendatenserver (3), der Daten über eine Karte eines Bereichs von einer gegenwärtigen Position des Taxis (2) zu einer gegenwärtigen Position des Handy-Anschlusses (1, 101, 102, 103) abdeckt, und Daten über Geschwindigkeitsbeschränkung auf den Straßen in dem Bereich,
wobei der Handy-Anschluss (1, 101, 102, 103) die Daten von dem Kartendatenserver (3) empfängt:

14. Handy-Anschluss zur Verwendung in einem System zum Vermieten eines Taxis, wobei das System einen Handy-Anschluss (1, 101, 102, 103) mit einem Rechner aufweist und einen Empfänger, mit dem ein Taxi (2) ausgestattet ist, wobei der Handy-Anschluss Funktionen zur Erfassung seiner gegenwärtigen Position und eines Taxis (2), das in der Nähe des Handy-Anschlusses (1, 101, 102, 103) angeordnet ist, aufweist und zur Übermittlung einer Anforderung an den Empfänger, dass das Taxis (2) zu dem Handy-Anschluss (1, 101, 102, 103) kommen soll und wobei der Rechner (11) eine Ankunftszeit berechnet, zu der erwartet wird, dass das Taxis (2) an dem Handy-Anschluss (1, 101, 102, 103) ankommt, basierend auf der gegenwärtigen Position des Handy-Anschlusses (1, 101, 102, 103) und der gegenwärtigen Position des Taxis (2).

15. Handy-Anschluss (1, 101, 102, 103) nach Anspruch 14, wobei das System ferner einen Taxidatenserver (4) aufweist, der Daten bezüglich des Taxis (2) speichert, und wobei der Handy-Anschluss (1, 101, 102, 103) eine Funktion zum Anzeigen der Daten des Taxis (2) aufweist, die von dem Taxidatenserver (4) übermittelt wurden.

16. Handy-Anschluss (1, 101, 102, 103) nach Anspruch 15, wobei der Handy-Anschluss (1, 101, 102, 103) eine Anzahl von Taxidaten anzeigt, so dass ein Benutzer (1A) des Handy-Anschlusses (1, 101, 102, 103) ein Taxi (2) unter angezeigten Taxis aufgrund der Anzahl von Taxidaten auswählen kann.

17. Handy-Anschluss (1, 101, 102, 103) nach Anspruch 15, wobei der Handy-Anschluss (1, 101, 102, 103) die Taxidaten von dem Taxidatenserver (4) über ein Paketnetzwerk (200), ein Paketnetzwerkgateway (33) und Internet (300) herunterlädt.

18. Handy-Anschluss (1, 101, 102, 103) nach Anspruch 15, wobei der Handy-Anschluss (1, 101, 102, 103) die Taxidaten von dem Taxidatenserver (4) über eine Mobilfunknetzwerk (400), einen Zugriffspunkt (41) eines Internetserviceproviders (ISP) und das Internet (300) herunterlädt.

19. Handy-Anschluss (1, 101, 102, 103) nach Anspruch 15, mit ferner einem Speicher (18) zum Speichern von Daten von Taxis, die andere Benutzer normalerweise anmieten, aufweist, wobei der Rechner (11) die gegenwärtige Position eines Taxis (2) empfängt, das ein Benutzer (1A) des Handy-Anschlusses (1, 101, 102, 103) unter den Taxis von dem Taxidatenserver (4) auswählt, und eine Ankunftszeit berechnet, zu der erwartet wird, dass das ausgewählte Taxi (2) bei dem Handy-Anschluss (1, 101, 102, 103) ankommt, basierend auf der gegenwärtigen Position des Handy-Anschlusses (1, 101, 102, 103) und der gegenwärtigen Position des Taxis (2).

20. Handy-Anschluss (1, 101, 102, 103) nach einem der Ansprüche 14 bis 19, wobei der Handy-Anschluss (1, 101, 102, 103) nach der Übertragung der Anforderung an den Empfänger die gegenwärtige Position des Taxis (2) in Echtzeit erhält.

21. Handy-Anschluss (1, 101, 102, 103) nach einem der Ansprüche 14 bis 19 mit ferner einem Sender (17) zur Übermittlung von Daten eines Ziels an den Empfänger, wenn der Handy-Anschluss (1, 101, 102, 103) die Anforderung an den Empfänger sendet.

22. Handy-Anschluss (1, 101, 102, 103) nach einem der Ansprüche 14 bis 19 mit ferner einem Speicher zum Speichern von Daten einer Route, die ein Taxi (2), das ein Benutzer (1A) des Handy-Anschlusses (1, 101, 102, 103) angemietet hat, gefahren ist.

23. Handy-Anschluss (1, 101, 102, 103) nach einem der Ansprüche 14 bis 19, wobei der Handy-Anschluss (1, 101, 102, 103) ein Mobiltelefon aufweist.

24. Verfahren zum Anmieten eines Taxis durch Senden einer Anforderung von einem Benutzerhandy-Anschluss (1, 101, 102, 103) der mit einem Rechner versehen ist, an einen Empfänger in einem Taxi (2), das in der Nähe des Handy-Anschlusses (1, 101, 102, 103) angeordnet ist, dass das Taxi (2) zu dem Handy-Anschluss (1, 101, 102, 103) kommen soll, mit:
(a) Erfassen der gegenwärtigen Position des Handy-Anschlusses (1, 101, 102, 103) und des Taxis durch GPS, Globales Positionierungssystem, und
(b) Berechnen der Ankunftszeit, zu der erwartet wird, dass das Taxi (2) bei dem Handy-Anschluss (1, 101, 102, 103) ankommt, basierend auf der gegenwärtigen Position des Handy-Anschlusses (1, 101, 102, 103) und der gegenwärtigen Position des Taxis (2).

25. Verfahren nach Anspruch 24, mit ferner:
(c) Empfangen von Daten, die sich auf das Taxi (2) beziehen, von einem Taxidatenserver (4) und
(d) Anzeigen der Taxidaten in dem Handy-Anschluss (1, 101, 102, 103).

26. Verfahren nach Anspruch 25, wobei der Handy-Anschluss (1, 101, 102, 103) eine Anzahl von Taxidaten bei (d) anzeigt, so dass ein Benutzer (1A) des Handy-Anschlusses (1, 101, 102, 103) ein Taxi (2) unter angezeigten Taxis basierend auf der Anzahl von Taxidaten auswählen kann.

27. Verfahren nach Anspruch 25, mit ferner dem Herunterladen der Daten des Taxis (2) von dem Taxidatenserver (4) auf den Handy-Anschluss (1, 101, 102, 103) über ein Paketnetzwerk (200), ein Paketnetzwerkgateway (33) und das Internet (300).

28. Verfahren nach Anspruch 25, mit ferner dem Herunterladen der Daten des Taxis (2) von dem Taxidatenserver an den Handy-Anschluss (1, 101, 102, 103) über ein Mobiltelefonnetzwerk (400), einen Zugriffspunkt (41) eines Internetserviceproviders (ISP) und das Internet (300).

29. Verfahren nach Anspruch 25, mit ferner
Speichern von Daten des Taxis (2) für das sich der Benutzer entschieden hat, und
Empfangen der gegenwärtigen Position eines Taxis (2), das der Benutzer (1A) des Handy-Anschlusses (1, 101, 102, 103) unter den Taxis von dem Taxidatenserver (4) auswählt.

30. Verfahren nach Anspruch 25, mit ferner der Übermittlung eines Kommentars eines Benutzers (1A) des Handy-Anschlusses (1, 101, 102, 103) über ein Taxi (2), das der Benutzer (1A) gemietet hat, an den Taxidatenserver (4) über das Internet (300).

31. Verfahren nach einem der Ansprüche 24 bis 30 mit ferner der Übermittlung von Daten eines Ziel an den Empfänger, wenn der Handy-Anschluss (1, 101, 102, 103) die Anforderung an dem Empfänger übermittelt.

32. Verfahren nach einem der Ansprüche 24 bis 30 mit ferner dem Speichern von Daten einer Route, die ein Taxi (2), das ein Benutzer (1A) des Handy-Anschlusses (1, 101, 102, 103) gemietet hat, gefahren ist.

33. Programm zum Veranlassen eines Computers ein Verfahren zum Anmieten eines Taxis (2) durchzuführen durch Übermittlung einer Anforderung von einem Benutzerhandy-Anschluss (1, 101, 102, 103), der mit einem Rechner ausgestattet ist, zu einem Empfänger in einem Taxi (2), das in der Nähe des Handy-Anschlusses (1, 101, 102, 103) angeordnet ist, dass das Taxi (2) zu dem Handy-Anschluss (1, 101, 102, 103) kommen soll, und wobei die durch den Computer in Übereinstimmung mit dem Programm durchgeführten Schritte aufweisen:
(a) Erfassung der gegenwärtigen Position des Handy-Anschlusses (1, 101, 102, 103) und des Taxis über GPS, Globales Positionierungssystem,
(b) Berechnen einer Ankunftszeit, zu der erwartet wird, dass das Taxi (2) an dem Handy-Anschluss (1, 101, 102, 103) ankommt, basierend auf der gegenwärtigen Position des Handy-Anschlusses (1, 101, 102, 103) und der gegenwärtigen Position des Taxis (2).

34. Programm nach Anspruch 33, wobei die Schritte ferner aufweisen:
(c) Empfangen von Daten, die sich auf das Taxi (2) beziehen, von einem Taxidatenserver (4) und
(d) Anzeigen der Taxidaten in dem Handy-Anschluss (1, 101, 102, 103).

35. Programm nach Anspruch 34, wobei eine Anzahl von Taxidaten in dem Schritt (d) derart angezeigt werden, dass ein Benutzer (1A) des Handy-Anschlusses (1, 101, 102, 103) ein Taxi (2) und der angezeigten Taxis auswählen kann, basierend auf der Anzahl von Taxidaten.

36. Programm nach Anspruch 33, 34 oder 35, wobei die Schritte ferner das Herunterladen der Taxidaten von dem Taxidatenserver (4) auf den Handy-Anschluss (1, 101, 102, 103) über ein Paketnetzwerk (200), ein Paketnetzwerkgateway (32) und das Internet (300) umfassen.

37. Programm nach Anspruch 33, 34 oder 35, wobei die Schritte ferner das Herunterladen der Taxidaten von dem Taxidatenserver (4) auf den Handy-Anschluss (1, 101, 102, 103) über ein Mobiltelefonnetzwerk (400), einen Zugriffspunkt (41) eines Internetserviceproviders (ISP) und das Internet (300) umfassen.

38. Programm nach Anspruch 33, 34 oder 35, wobei die Schritte ferner aufweisen:
Speichern von Daten von Taxis, die ein Benutzer gemietet hat, und
Empfangen einer gegenwärigen Position eines Taxis (2), das ein Benutzer (1A) des Handy-Anschlusses (1, 101, 102, 103) unter den Taxis von dem Taxidatenserver (4) auswählt.

39. Programm nach Anspruch 33, 34 oder 35, wobei die Schritte ferner das Übermitteln von Kommentaren eines Benutzers (1A) des Handy-Anschlusses (1, 101, 102, 103) über ein Taxi (2), dass der Benutzer (1A) gemietet hat, an den Taxidatenserver (4) über das Intenet (300) umfassen.

40. Programm nach Anspruch 33, 34 oder 35, wobei die Schritte ferner das Übermitteln von Daten eines Ziels an den Empfänger umfassen, wenn der Handy-Anschluss (1, 101, 102, 103) die Anforderung an den Empfänger übermittelt.

41. Programm nach Anspruch 33, 34 oder 35, wobei die Schritte ferner das Speichern von Daten einer Route umfassen, die ein Taxi (2), das ein Benutzer (1A) des Handy-Anschlusses (1, 101, 102, 103) gemietet hat, gefahren ist.

## Revendications

1. Système destiné à réserver un taxi (2), comprenant un terminal portatif (1, 101, 102, 103), comportant un calculateur (11), et un récepteur équipé dans un taxi (2), dans lequel
le terminal portatif (1, 101, 102, 103) a des fonctions de détection d'une position en cours de lui-même et d'un taxi placé à proximité du terminal portatif, au travers d'un GPS (Global Positioning System : Système de Positionnement Global), et de transmission d'une requête vers le récepteur du taxi (2) pour que le taxi (2) vienne vers le terminal portatif (1, 101, 102, 103) et
le calculateur (11) calcule un moment d'arrivée auquel l'arrivée du taxi est attendue au niveau du terminal portatif (1, 101, 102, 103), sur la base de la position en cours du terminal portatif (1, 101, 102, 103) et d'une position en cours du taxi (2).

2. Système selon la revendication 1, comprenant en outre un serveur (4) de données de taxis sur lequel sont mémorisées des données concernant le taxi (2),
le terminal portatif (1, 101, 102, 103) ayant une fonction d'affichage des données de taxis (2) transmises depuis le serveur (4) de données de taxis.

3. Système selon la revendication 2, dans lequel les données de taxi (2) comportent au moins une parmi une position en cours du taxi (2), un tarif du taxi (2), un âge d'un conducteur du taxi (2), les années d'expérience d'un conducteur du taxi (2), des commentaires du conducteur, et des commentaires d'un utilisateur (1A) qui a pris le taxi (2) auparavant.

4. Système selon la revendication 2, dans lequel le terminal portatif (1, 101, 102, 103) affiche une pluralité de données de taxis (2) sur ce dernier de telle manière qu'un utilisateur (1A) du terminal portatif (1, 101, 102, 103) peut sélectionner un taxi (2) parmi des taxis affichés, sur la base de la pluralité de données de taxis.

5. Système selon la revendication 2, dans lequel le terminal portatif (1, 101, 102, 103) télécharge les données de taxi depuis le serveur (4) de données de taxis vers ce dernier au travers d'un réseau (200) de paquets, d'une passerelle (33) de réseau de paquets et de l'Internet (300).

6. Système selon la revendication 2, dans lequel le terminal portatif (1, 101, 102, 103) télécharge les données de taxi depuis le serveur (4) de données de taxis vers ce dernier au travers d'un réseau (400) de téléphones cellulaires, d'un point d'accès (41) d'un fournisseur de services Internet (FSI) et de l'Internet (300).

7. Système selon la revendication 2, comprenant en outre une mémoire (18) mémorisant des données de taxis que des utilisateurs ont utilisées pour réserver, et dans lequel le calculateur (11) reçoit une position en cours d'un taxi (2) qu'un utilisateur (1A) du terminal portatif (1, 101, 102, 103) sélectionne parmi les taxis, depuis le serveur (4) de données de taxis et calcule un moment d'arrivée auquel l'arrivée du taxi (2) est attendue au niveau du terminal portatif (1, 101, 102, 103), sur la base d'une position en cours du terminal portatif (1, 101, 102, 103) et de la position en cours du taxi (2).

8. Système selon l'une quelconque des revendications 1 à 7, dans lequel le terminal portatif (1, 101, 102, 103) reçoit, après transmission de la requête vers le récepteur, au moins une parmi une position en cours du terminal portatif (1, 101, 102, 103) et une position en cours du taxi (2) en temps réel.

9. Système selon la revendication 3, dans lequel le serveur (4) de données de taxis reçoit des commentaires d'un utilisateur (1A) du terminal portatif (1, 101, 102, 103) à propos d'un taxi (2) que l'utilisateur (1A) a réservé, au travers de l'Internet (300).

10. Système selon l'une quelconque des revendications 1 à 7, dans lequel le terminal portatif (1, 101, 102, 103) comporte un transmetteur (17) transmettant des données d'une destination vers le récepteur lorsque le terminal portatif (1, 101, 102, 103) transmet la requête vers le récepteur.

11. Système selon l'une quelconque des revendications 1 à 7, dans lequel le terminal portatif (1, 101, 102, 103) comporte une mémoire (20) dans laquelle sont mémorisées des données d'un itinéraire qu'un taxi (2) réservé par un utilisateur (1A) du terminal portatif (1, 101, 102, 103) a parcouru.

12. Système selon l'une quelconque des revendications 1 à 7, dans lequel le terminal portatif (1, 101, 102, 103) est composé d'un téléphone cellulaire.

13. Système selon l'une quelconque des revendications 1 à 7, comprenant en outre un serveur (3) de données de carte sur lequel sont mémorisées des données à propos d'une carte couvrant une zone depuis une position en cours du taxi (2) jusqu'à une position en cours du terminal portatif (1, 101, 102, 103), et des données à propos d'une limitation de vitesse des routes de la zone, le terminal portatif (1, 101, 102, 103) recevant les données depuis le serveur (3) de données de carte.

14. Terminal portatif utilisé dans un système destiné à réserver un taxi, le système étant composé du terminal portatif (1, 101, 102, 103) comportant un calculateur et d'un récepteur équipé dans un taxi (2), dans lequel le terminal portatif a
des fonctions de détection d'une position en cours de lui-même et d'un taxi (2) situé à proximité du terminal portatif (1, 101, 102, 103) au travers d'un GPS (Global Positioning System : Système de Positionnement Global), et de transmission d'une requête vers le récepteur pour que le taxi (2) vienne vers le terminal portatif (1, 101, 102, 103), et
le calculateur (11) calculant un moment d'arrivée auquel l'arrivée du taxi (2) est attendue au niveau du terminal portatif (1, 101, 102, 103), sur la base de la position en cours du terminal portatif (1, 101, 102, 103) et de la position en cours du taxi (2).

15. Terminal portatif (1, 101, 102, 103) selon la revendication 14, dans lequel le système comporte en outre un serveur (4) de données de taxis sur lequel sont mémorisées des données concernant le taxi (2) et dans lequel le terminal portatif (1, 101, 102, 103) a une fonction d'affichage des données de taxis (2) transmises depuis le serveur (4) de données de taxis.

16. Terminal portatif (1, 101, 102, 103) selon la revendication 15, dans lequel le terminal portatif (1, 101, 102, 103) affiche une pluralité de données de taxis de telle manière qu'un utilisateur (1A) du terminal portatif (1, 101, 102, 103) peut sélectionner un taxi (2) parmi des taxis affichés, sur la base de la pluralité de données de taxis.

17. Terminal portatif (1, 101, 102, 103) selon la revendication 15, dans lequel le terminal portatif (1, 101, 102, 103) télécharge les données de taxi depuis le serveur (4) de données de taxis vers ce dernier au travers d'un réseau (200) de paquets, d'une passerelle (33) de réseau de paquets et de l'Internet (300).

18. Terminal portatif (1, 101, 102, 103) selon la revendication 15, dans lequel le terminal portatif (1, 101, 102, 103) télécharge les données de taxi depuis le serveur (4) de données de taxis vers ce dernier au travers d'un réseau (400) de téléphones cellulaires, d'un point d'accès (41) d'un fournisseur de services Internet (FSI) et de l'Internet (300).

19. Terminal portatif (1, 101, 102, 103) selon la revendication 15, comprenant en outre une mémoire (18) mémorisant des données de taxi que d'autres utilisateurs ont utilisées pour réserver, le calculateur (11) recevant une position en cours d'un taxi (2) qu'un utilisateur (1A) du terminal portatif (1, 101, 102, 103) sélectionne parmi les taxis, depuis le serveur (4) de données de taxi, et calculant un moment d'arrivée auquel l' arrivée du taxi (2) sélectionné est attendue au niveau du terminal portatif (1, 101, 102, 103), sur la base d'une position en cours du terminal portatif (1, 101, 102, 103) et de la position en cours du taxi (2).

20. Terminal portatif (1, 101, 102, 103) selon l'une quelconque des revendications 14 à 19, dans lequel le terminal portatif (1, 101, 102, 103) reçoit, après transmission de la requête vers le récepteur, la position en cours du taxi (2) en temps réel.

21. Terminal portatif (1, 101, 102, 103) selon l'une quelconque des revendications 14 à 19, comportant en outre un transmetteur (17) transmettant des données d'une destination vers le récepteur lorsque le terminal portatif (1, 101, 102, 103) transmet la requête vers le récepteur.

22. Terminal portatif (1, 101, 102, 103) selon l'une quelconque des revendications 14 à 19, comportant en outre une mémoire sur laquelle sont mémorisées des données d'un itinéraire qu'un taxi (2) réservé par un utilisateur (1A) du terminal portatif (1, 101, 102, 103) a parcouru.

23. Terminal portatif (1, 101, 102, 103) selon l'une quelconque des revendications 14 à 19, dans lequel le terminal portatif (1, 101, 102, 103) est composé d'un téléphone cellulaire.

24. Procédé de réservation d'un taxi par transmission d'une requête depuis un terminal portatif (1, 101, 102, 103), équipé d'un calculateur, de l'utilisateur vers un récepteur équipé dans un taxi (2) placé à proximité du terminal portatif (1, 101, 102, 103) pour que le taxi (2) vienne vers le terminal portatif (1, 101, 102, 103), comprenant les étapes consistant à :
(a) détecter une position en cours du terminal portatif (1, 101, 102, 103) et du taxi, au travers d'un GPS (Global Positioning System : Système de Positionnement Global), et
(b) calculer un moment d'arrivée auquel l'arrivée du taxi (2) est attendue au niveau du terminal portatif (1, 101, 102, 103), sur la base de la position en cours du terminal portatif (1, 101, 102, 103) et de la position en cours du taxi (2).

25. Procédé selon la revendication 24, comprenant en outre les étapes consistant à :
(c) recevoir des données concernant le taxi (2) depuis un serveur (4) de données de taxi ;
(d) afficher les données de taxi sur le terminal portatif (1, 101, 102, 103).

26. Procédé selon la revendication 25, dans lequel le terminal portatif (1, 101, 102, 103) affiche une pluralité de données de taxi dans l'étape (d) de telle manière qu'un utilisateur (1A) du terminal portatif (1, 101, 102, 103) peut sélectionner un taxi (2) parmi des taxis affichés, sur la base de la pluralité de données de taxi.

27. Procédé selon la revendication 25, comprenant en outre l'étape consistant à télécharger les données de taxi (2) depuis le serveur (4) de données de taxis vers le terminal portatif (1, 101, 102, 103) au travers d'un réseau (200) de paquets, d'une passerelle (33) de réseau de paquets et de l'Internet (300).

28. Procédé selon la revendication 25, comprenant en outre l'étape consistant à télécharger les données de taxi (2) depuis le serveur de données de taxis (2) vers le terminal portatif (1, 101, 102, 103) au travers d'un réseau (400) de téléphones cellulaires, d'un point d'accès (41) à un fournisseur de services Internet (FSI) et de l'Internet (300).

29. Procédé selon la revendication 25, comprenant en outre les étapes consistant à :
mémoriser des données d'un taxi (2) que des utilisateurs ont réservé ; et
recevoir une position en cours d'un taxi (2) qu'un utilisateur (1A) du terminal portatif (1, 101, 102, 103) sélectionne parmi les taxis, depuis le serveur (4) de données de taxis.

30. Procédé selon la revendication 25, comprenant en outre l'étape consistant à transmettre des commentaires d'un utilisateur (1A) du terminal portatif (1, 101, 102, 103) à propos d'un taxi (2) que l'utilisateur (1A) a réservé, vers le serveur (4) de données de taxis au travers de l'Internet (300).

31. Procédé selon l'une quelconque des revendications 24 à 30, comprenant en outre l'étape consistant à transmettre des données d'une destination vers le récepteur lorsque le terminal portatif (1, 101, 102, 103) transmet la requête vers le récepteur.

32. Procédé selon l'une quelconque des revendications 24 à 30, comprenant en outre l'étape consistant à mémoriser des données d'un itinéraire qu'un taxi (2) réservé par un utilisateur (1A) du terminal portatif (1, 101, 102, 103) a parcouru.

33. Programme destiné à amener un ordinateur à effectuer un procédé de réservation d'un taxi (2) en transmettant une requête depuis un terminal portatif (1, 101, 102, 103), équipé d'un calculateur, de l'utilisateur vers un récepteur équipé dans un taxi (2) situé à proximité du terminal portatif (1, 101, 102, 103) pour que le taxi (2) vienne vers le terminal portatif (1, 101, 102, 103), et dans lequel des étapes exécutées par l'ordinateur conformément au programme comportent les étapes consistant à :
a) détecter une position en cours du terminal portatif (1, 101, 102, 103) et du taxi au travers d'un GPS (Global Positioning System : Système de Positionnement Global) ;
b) calculer un moment d'arrivée auquel l'arrivée du taxi (2) est attendue au niveau du terminal portatif (1, 101, 102, 103), sur la base de la position en cours du terminal portatif (1, 101, 102, 103) et de la position en cours du taxi (2).

34. Programme selon la revendication 33, dans lequel les étapes comportent en outre les étapes consistant à :
c) recevoir des données concernant le taxi (2) depuis un serveur (4) de données de taxis ; et
d) afficher les données de taxi sur le terminal portatif (1, 101, 102, 103).

35. Programme selon la revendication 34, dans lequel une pluralité de données de taxi sont affichées dans l'étape d) de telle manière qu'un utilisateur (1A) du terminal portatif (1, 101, 102, 103) peut sélectionner un taxi (2) parmi des taxis affichés, sur la base de la pluralité de données de taxi.

36. Programme selon la revendication 33, 34 ou 35, dans lequel les étapes comportent en outre le téléchargement des données de taxi depuis le serveur (4) de données de taxis vers le terminal portatif (1, 101, 102, 103) au travers d'un réseau (200) de paquets, d'une passerelle (32) de réseau de paquets et de l'Internet (300).

37. Programme selon la revendication 33, 34 ou 35, dans lequel les étapes comportent en outre le téléchargement des données de taxi depuis le serveur (4) de données de taxis vers le terminal portatif (1, 101, 102, 103) au travers d'un réseau (400) de téléphones cellulaires, d'un point d'accès (41) d'un fournisseur de services Internet (FSI) et de l'Internet (300).

38. Programme selon la revendication 33, 34 ou 35, dans lequel les étapes comportent en outre :
la mémorisation des données de taxi que des utilisateurs ont réservé ; et
la réception d'une position en cours d'un taxi (2) qu'un utilisateur (1A) du terminal portatif (1, 101, 102, 103) sélectionne parmi les taxis, depuis le serveur (4) de données de taxis.

39. Programme selon la revendication 33, 34 ou 35, dans lequel les étapes comportent en outre la transmission de commentaires d'un utilisateur (1A) du terminal portatif (1, 101, 102, 103) à propos d'un taxi (2) que l'utilisateur (1A) a réservé, vers le serveur (4) de données de taxis au travers de l'Internet (300).

40. Programme selon la revendication 33, 34 ou 35, dans lequel les étapes comportent en outre la transmission des données d'une destination vers le récepteur lorsque le terminal portatif (1, 101, 102, 103) transmet la requête vers le récepteur.

41. Programme selon la revendication 33, 34 ou 35, dans lequel les étapes comportent en outre la mémorisation des données d'un itinéraire qu'un taxi (2) réservé par un utilisateur (1A) du terminal portatif (1, 101, 102, 103) a parcouru.
